(19) **Europäisches Patentamt**
**European Patent Office**
**Office européen des brevets**

(11) **EP 4 087 106 A1**

(12) **EUROPEAN PATENT APPLICATION**

(43) Date of publication:
**09.11.2022 Bulletin 2022/45**

(21) Application number: **21172865.4**

(22) Date of filing: **07.05.2021**

(51) International Patent Classification (IPC):
*H02M 1/38* (2007.01)      *H02M 3/335* (2006.01)
*H02M 1/40* (2007.01)      *H02M 7/48* (2007.01)

(52) Cooperative Patent Classification (CPC):
**H02M 3/33584; H02M 1/38; H02M 1/385;**
**H02M 1/40; H02M 7/4803**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Hitachi Energy Switzerland AG**
**5400 Baden (CH)**

(72) Inventors:
• **SIEMASZKO, Daniel**
  **1201 Geneve (CH)**
• **KLAEUSLER, Martin**
  **5000 Aarau (CH)**
• **RUIZ, Raul**
  **5300 Turgi (CH)**

(74) Representative: **Vossius & Partner**
**Patentanwälte Rechtsanwälte mbB**
**Siebertstraße 3**
**81675 München (DE)**

(54) **POWER CONTROL OF A POWER CONVERTER**

(57)    The present disclosure relates to a method for power control of a power converter comprising: controlling, with a first signal having a first duty cycle D1, a first active switching component in a switching unit of at least one branch; controlling, with a second signal having a second duty cycle D2, a second active switching component of the switching unit; determining a polarity of a monitored current through at least one inductive component coupled to the at least one branch; and adjusting the first duty cycle D1 and the second duty cycle D2 based on the determined polarity. The present disclosure also relates to a respective controller and system.

**Fig. 1**

Processed by Luminess, 75001 PARIS (FR)

**(Cont. next page)**

**Fig. 5**

**Description**

The present disclosure relates to a method and a device for power control of a power converter.

Power converters controlled by power electronics require precise control and robust response to reduce losses during power conversion. In particular, the controllability is often limited by the non-ideal static and dynamic behavior of switching units in power electronics.

An ideal switching unit comprising active switching component(s) achieves instantaneous switching among terminals. However, a practical implementation thereof suffers from dynamic behavior governed by semiconductor device physics. Active switching components in a switch unit exhibits a finite rise and fall time, requiring one active switching component to be forced into a non-conducting state before the other active switching component is forced into a conducting state in order to avoid simultaneous conduction. The time range where the active switching components are forced into a non-conducting state is referred as deadtime. In case of the switching unit forming a branch, such precautionary measure avoids short circuits, preventing overshoot in voltage and excessive power consumption.

In a power converter comprising an inductive component and a switching unit, such deadtime creates uncertainty in the voltage across the inductive component. The uncertainty caused by the deadtime causes the DC component in the current through the inductive component which is associated with power loss.

Such deadtime can be optimized by measuring the voltage drop across the active switching components or the wave shape of the phase voltage during switching to minimize DC component in the current. However, such approaches lead to only partial removal of the DC component in the current through the inductive component.

In addition, a step change applied to the frequency or the phase of the voltage across the inductive component alters the period of current flow causing the power peak and DC component in the current. Such peak in power deteriorates the transitional timing response and limits the fields of applications due to its low robustness.

Thus, there is a need to improve the mitigation of the induced DC component in the current in a power converter and the step response to frequency and phase shift to achieve robust power control.

The above-mentioned objects are achieved with the features of the independent claims. Dependent claims define preferred embodiments of the disclosure.

In particular, the present disclosure relates to a method for power control of a power converter comprises controlling, with a first signal having a first duty cycle D1, a first active switching component in a switching unit of at least one branch; controlling, with a second signal having a second duty cycle D2, a second active switching component of the switching unit; determining a polarity of a monitored current through at least one inductive component coupled to the at least one branch; and adjusting the first duty cycle D1 and the second duty cycle D2 based on the determined polarity.

Various embodiments may advantageously implement the following features:
A power converter may comprise a third active switching component in a switching unit of a second branch and a fourth active switching component in the switching unit of the second branch. In such case, the method may comprise controlling the third active switching component with a third signal having a third duty cycle $D_3$; controlling the fourth active switching component with a fourth signal having a fourth duty cycle $D_4$; determining a polarity of a monitored current through at least one inductive component coupled to the second branch; and adjusting the third duty cycle $D_3$ and the fourth duty cycle $D_4$ based on the determined polarity.

A power converter may comprise a fifth active switching component in a switching unit of a third branch and a sixth active switching component in the switching unit of the third branch. In such case, the method may comprise controlling the fifth active switching component with a fifth signal having a fifth duty cycle $D_5$; controlling the sixth active switching component with a sixth signal having a sixth duty cycle $D_6$; determining a polarity of a monitored current through at least one inductive component coupled to the third branch; and adjusting the fifth duty cycle $D_5$ and the sixth duty cycle $D_6$ based on the determined polarity.

A power converter may comprise a seventh active switching component in a switching unit of a fourth branch and an eighth active switching component in the switching unit of the fourth branch. In such case, the method may comprise controlling the seventh active switching component with a seventh signal having a seventh duty cycle $D_7$; controlling the eighth active switching component with an eighth signal having an eighth duty cycle Ds; determining a polarity of a monitored current through at least one inductive component coupled to the fourth branch; and adjusting the seventh duty cycle $D_7$ and the eighth duty cycle $D_8$ based on the determined polarity.

According to an embodiment, the power converter comprises a first active bridge. The first and the second branch may belong to the first active bridge. According to an embodiment, the power converter comprises a second active bridge. The third and the fourth branch may belong to the second active bridge.

A duty cycle of a signal may be defined by the ratio between the activation period and a reference period.

A reference period may be the period of a reference signal. It is understood by the skilled person that a reference signal may be generated internally and/or fed to the converter or an auxiliary circuit to provide a timing reference.

According to an embodiment, an activation period of the first signal and an activation period of the second signal are compared to a reference period $T_{ref}$ to calculate the first duty cycle $D_1$ and the second duty cycle $D_2$.

According to an embodiment, the first signal having a first duty cycle $D_1$ and the second signal having a second duty cycle $D_2$ are periodic waveforms in any shape.

According to an embodiment, the activation period of the first signal and the activation period of the second signal are set such that the first active switching component and the second active switching component are not conducting for a time range $T_{Dead}$. This time range may be known as deadtime to the skilled person.

According to an embodiment, the time range $T_{Dead}$ may be dependent on the at least one switching unit.

According to an embodiment, a first electrical component is arranged in parallel to the first active switching component and a second electrical component is arranged in parallel to the second active switching component. During the time range $T_{dead}$ the first electrical component and the second electrical component may act as a current source or sink.

According to an embodiment, during the adjusting the first duty cycle $D_1$ and the second duty cycle $D_2$ a ratio between the time range $T_{Dead}$ and a reference period $T_{ref}$ is kept constant.

According to an embodiment, during the adjusting the first duty cycle $D_1$ and the second duty cycle $D_2$ the time range $T_{Dead}$ is kept constant.

According to an embodiment, the method comprises iterating the determining a polarity of the monitored current and the adjusting the first duty cycle $D_1$ and the second duty cycle $D_2$.

According to an embodiment, by adjusting the first duty cycle $D_1$ and the second duty cycle $D_2$, the first duty cycle $D_1$ is increased by the same amount as the second duty cycle $D_2$ is decreased or the first duty cycle $D_1$ is decreased by the same amount as the second duty cycle $D_2$ is increased.

According to an embodiment, the periods of the first signal and the second signal are between 1kHz and 25kHz.

According to an embodiment, the first active switching component and a second active switching component are at least one of an insulated-gate bipolar transistor, a metal-oxide-semiconductor field-effect transistor, a bipolar transistor or a thyristor.

According to an embodiment, the power converter comprises or is at least one of an AC/AC, AC/DC, DC/DC, or DC/AC converter, in particular an active bridge converter, more particularly a dual active bridge converter.

According to an embodiment, the method comprises altering a phase shift based on at least two target phase shifts.

According to an embodiment, the method comprises adjusting the first duty cycle $D_1$ and the second duty cycle $D_2$ based on the altered phase shift.

According to an embodiment, the altered phase shift comprises a current target phase shift and/or a previous phase shift.

According to an embodiment, the at least two target phase shifts are indexed using a reference signal.

According to an embodiment, the at least two target phase shifts are consecutive phase shifts.

According to an embodiment, the at least two target phase shifts are consecutive indexed phase shifts.

According to an embodiment, the altering comprises or is calculating a mean value of the at least two target phase shifts.

According to an embodiment, the altering comprises or is calculating a mean value of the at least two indexed target phase shifts.

According to an embodiment, a period is altered based on at least two target periods.

According to an embodiment, a target period is converted from a target frequency.

According to an embodiment, the target frequency is a continuous or a discontinuous function.

According to an embodiment, the target period and/or the target frequency is indexed for every frequency value.

According to an embodiment, a period is altered based on the at least two indexed target periods.

According to an embodiment, the first duty cycle $D_1$ and the second duty cycle $D_2$ are adjusted based on the altered period.

According to an embodiment, the altered period comprises a current target period and/or a previous target period.

According to an embodiment, the altered period comprises a current target period and/or a previous indexed target period.

According to an embodiment, the period of the reference signal may be the same as the altered period or the target period.

According to an embodiment, the period of the reference signal may be the same as the altered period or the indexed target period.

According to an embodiment, the at least two target periods are the reference period $T_{ref}$.

According to an embodiment, the at least two target periods are consecutive periods.

According to an embodiment, the altering comprises or is calculating a mean value of the at least two target periods.

According to an embodiment, the altering comprises or is calculating a mean value of the at least two indexed target periods.

According to an embodiment, the method comprises iterating the altering a period based on the at least two target periods, and the adjusting the first duty cycle $D_1$ and the second duty cycle $D_2$.

According to an embodiment, the first duty cycle $D_1$ is increased by the same amount as the second duty cycle $D_2$ is decreased or the first duty cycle $D_1$ is de-

creased by the same amount as the second duty cycle $D_2$ is increased.

The present disclosure relates to a method for power control of a power converter comprising controlling, with a first signal having a first duty cycle $D_1$, a first active switching component in a switching unit of at least one branch; controlling, with a second signal having a second duty cycle $D_2$, a second active switching component of the switching unit; altering a period based on the at least two target periods; and adjusting the first duty cycle $D_1$ and the second duty cycle $D_2$ based on the altered period.

A power converter may comprise a third active switching component in a switching unit of a second branch and a fourth active switching component in the switching unit of the second branch. In such case, the method may comprise controlling the third active switching component with a third signal having a third duty cycle $D_3$; controlling the fourth active switching component with a fourth signal having a fourth duty cycle $D_4$; altering a period based on the at least two target periods; and adjusting the third duty cycle $D_3$ and the fourth duty cycle $D_4$ based on the altered period.

A power converter may comprise a fifth active switching component in a switching unit of a third branch and a sixth active switching component in the switching unit of the third branch. In such case, the method may comprise controlling the fifth active switching component with a fifth signal having a fifth duty cycle $D_5$; controlling the sixth active switching component with a sixth signal having a sixth duty cycle $D_6$; altering a period based on the at least two target periods; and adjusting the fifth duty cycle $D_5$ and the sixth duty cycle $D_6$ based on the altered period.

A power converter may comprise a seventh active switching component in a switching unit of a fourth branch and an eighth active switching component in the switching unit of the fourth branch. In such case, the method may comprise controlling the seventh active switching component with a seventh signal having a seventh duty cycle $D_7$; controlling the eighth active switching component with an eighth signal having an eighth duty cycle $D_8$; altering a period based on the at least two target periods; and adjusting the seventh duty cycle $D_7$ and the eighth duty cycle $D_8$ based on the altered period.

A duty cycle of a signal may be defined by the ratio between the activation period and a reference period.

A reference period may be the period of a reference signal. It is understood by the skilled person that a reference signal may be generated internally and/or fed to the converter or an auxiliary circuit to provide a timing reference.

According to an embodiment, a target period is converted from a target frequency.

According to an embodiment, the target frequency is a continuous or a discontinuous function.

According to an embodiment, the target period and/or the target frequency is indexed for every frequency value.

According to an embodiment, a period is altered based on the at least two target periods.

According to an embodiment, a period is altered based on the at least two indexed target periods.

According to an embodiment, the first duty cycle $D_1$ and the second duty cycle $D_2$ are adjusted based on the altered period.

According to an embodiment, the altered period comprises a current target period and/or a previous target period.

According to an embodiment, the altered period comprises a current target period and/or a previous indexed target period.

According to an embodiment, the period of the reference signal may be the same as the altered period or the target period.

According to an embodiment, the period of the reference signal may be the same as the altered period or the indexed target period.

According to an embodiment, the at least two target periods are reference periods $T_{ref}$.

According to an embodiment, the at least two target periods are consecutive periods.

According to an embodiment, the altering comprises or is calculating a mean value of the at least two target periods.

According to an embodiment, the altering comprises or is calculating a mean value of the at least two indexed target periods.

According to an embodiment, an activation period of the first signal and an activation period of the second signal are compared to a reference period $T_{ref}$ to calculate the first duty cycle $D_1$ and the second duty cycle $D_2$.

According to an embodiment, the activation period of the first signal and the activation period of the second signal are set such that the first active switching component and the second active switching component are not conducting simultaneously for a time range $T_{dead}$.

According to an embodiment, the method comprises iterating the altering a period based on the at least two target periods, and the adjusting the first duty cycle $D_1$ and the second duty cycle $D_2$.

According to an embodiment, by adjusting the first duty cycle $D_1$ and the second duty cycle $D_2$. the first duty cycle $D_1$ is increased by the same amount as the second duty cycle $D_2$ is decreased or the first duty cycle $D_1$ is decreased by the same amount as the second duty cycle $D_2$ is increased.

According to an embodiment, the first active switching component and a second active switching component are at least one of an insulated-gate bipolar transistor, a metal-oxide-semiconductor field-effect transistor, a bipolar transistor or a thyristor.

According to an embodiment, the power converter comprises or is at least one of an AC/AC, AC/DC, DC/DC, or DC/AC converter, in particular an active bridge converter, more particularly a dual active bridge converter.

The present disclosure relates to a method for power control of a power converter comprising controlling, with a first signal having a first duty cycle $D_1$, a first active switching component in a switching unit of at least one branch; controlling, with a second signal having a second duty cycle $D_2$, a second active switching component of the switching unit; altering a phase shift based on at least two target phase shifts; and adjusting the first duty cycle $D_1$ and the second duty cycle $D_2$ based on the altered phase shift.

A power converter may comprise a third active switching component in a switching unit of a second branch and a fourth active switching component in the switching unit of the second branch. In such case, the method may comprise controlling the third active switching component with a third signal having a third duty cycle $D_3$; controlling the fourth active switching component with a fourth signal having a fourth duty cycle $D_4$; altering a phase shift based on at least two target phase shifts; and adjusting the third duty cycle $D_3$ and the fourth duty cycle $D_4$ based on the altered phase shift.

A power converter may comprise a fifth active switching component in a switching unit of a third branch and a sixth active switching component in the switching unit of the third branch. In such case, the method may comprise controlling the fifth active switching component with a fifth signal having a fifth duty cycle $D_5$; controlling the sixth active switching component with a sixth signal having a sixth duty cycle $D_6$; altering a phase shift based on at least two target phase shifts; and adjusting the fifth duty cycle $D_5$ and the sixth duty cycle $D_6$ based on the altered phase shift.

A power converter may comprise a seventh active switching component in a switching unit of a fourth branch and an eighth active switching component in the switching unit of the fourth branch. In such case, the method may comprise controlling the seventh active switching component with a seventh signal having a seventh duty cycle $D_7$; controlling the eighth active switching component with an eighth signal having an eighth duty cycle $D_8$; altering a phase shift based on at least two target phase shifts; and adjusting the seventh duty cycle $D_7$ and the eighth duty cycle $D_8$ based on the altered phase shift.

A duty cycle of a signal is defined by the ratio between the activation period and a reference period.

A reference period may be the period of a reference signal. It is understood by the skilled person that a reference signal may be generated internally and/or fed to the converter or an auxiliary circuit to provide a timing reference.

According to an embodiment, the altered phase shift comprises a current target phase shift and/or a previous target phase shift.

According to an embodiment, the target phase shifts are indexed using a reference signal.

According to an embodiment, the at least two target phase shifts are consecutive phase shifts.

According to an embodiment, the at least two target phase shifts are consecutive indexed phase shifts.

According to an embodiment, the altering comprises or is calculating a mean value of the at least two target phase shifts.

According to an embodiment, the altering comprises or is calculating a mean value of the at least two indexed target phase shifts.

According to an embodiment, an activation period of the first signal and an activation period of the second signal are compared to a reference period $T_{ref}$ to calculate the first duty cycle $D_1$ and the second duty cycle $D_2$.

According to an embodiment, the activation period of the first signal and the activation period of the second signal are set such that the first active switching component and the second active switching component are not conducting simultaneously for a time range $T_{dead}$.

According to an embodiment, the method comprises iterating the altering a phase shift based on the at least two target phase shifts, and the adjusting the first duty cycle $D_1$ and the second duty cycle $D_2$.

According to an embodiment, by adjusting the first duty cycle $D_1$ and the second duty cycle $D_2$ the first duty cycle $D_1$ is increased by the same amount as the second duty cycle $D_2$ is decreased or the first duty cycle $D_1$ is decreased by the same amount as the second duty cycle $D_2$ is increased.

According to an embodiment, the first active switching component and a second active switching component are at least one of an insulated-gate bipolar transistor, a metal-oxide-semiconductor field-effect transistor, a bipolar transistor or a thyristor.

According to an embodiment, the power converter comprises or is at least one of an AC/AC, AC/DC, DC/DC, or DC/AC converter, in particular an active bridge converter, more particularly a dual active bridge converter.

The present disclosure also relates to a controller for power control of a power converter. The controller comprises a processor. The processor is configured to carry out the method of any one of the aforementioned embodiments.

The present disclosure also relates to a system comprising a controller as described above and a power converter as described above.

The exemplary embodiments disclosed herein are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

The above and other aspects and their implementations are described in greater detail in the drawings, the descriptions, and the claims.

Fig. 1 shows an exemplary power converter according to an embodiment of the present disclosure, in particular a DC/DC dual active bridge converter isolated by a transformer.

Fig. 2 shows exemplary signals of a power converter according to an embodiment of the present disclosure.

Fig. 3 shows a flowchart of a method according to an embodiment of the present disclosure.

Fig. 4 shows exemplary signals and the monitoring current, in response to phase shifts, of a power converter.

Fig. 5 shows exemplary signals and the monitoring current, in response to phase shifts, of a power converter according to an embodiment of the present disclosure.

Fig. 6 shows exemplary signals and the monitoring current, in response to frequency shifts, of a power converter according to an embodiment of the present.

Fig. 7a and 7b show simulated current and voltage responses to a step phase shift applied to a power converter according to an embodiment of the present disclosure.

In the following, exemplary embodiments of the disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

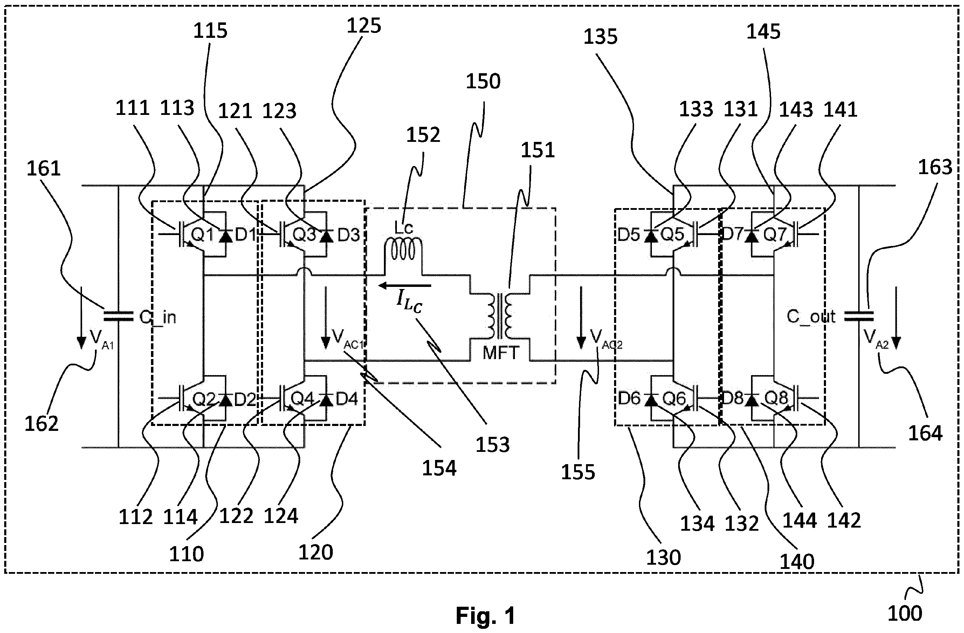

Fig. 1 shows an exemplary power converter according to an embodiment of the present disclosure, in particular a DC/DC dual active bridge converter isolated by a transformer.

In the embodiment shown in Fig. 1, a power converter 100 is a DC/DC converter. The input voltage 162 is measured over a capacitor 161 and the output voltage 164 is measured over a capacitor 163. The converter comprises a transformer unit 150, where an transformer 151 is series connected with a leakage inductor 152. However, it is understood by the skilled person that the at least one inductor may be any inductive component either as a self-standing component and/or a representation of parasitic component. A current through the leakage inductor 152 is the monitored current 153. The transformer unit 150 is coupled to at least one branch 115 comprising at least one switching unit 110. The at least one switching unit 110 comprises a first active switching component 111 and a second active switching component 112 acting as switches. A first diode 113 is connected in parallel to the first active switching component 111 and a second diode is connected in parallel to the second active switching component 112. The transformer unit 150 is further coupled to a second branch 125 comprising at least one switching unit 120. The at least one switching unit 120 comprises a third active switching component 121 and a fourth active switching component 122. A third diode 123 is connected in parallel to the third active switching component 121 and a fourth diode 124 is connected to the fourth active switching component 122. The voltage across the node coupling the transformer unit 150 to the first branch 115 and the node coupling the transformer unit 150 to the second branch 125 is referred as a primary voltage 154. The transformer is further coupled to a third branch 135 comprising at least one switching unit 130. The at least one switching unit 130 comprises a fifth active switching component 131 and a sixth active switching component 132. A fifth diode 133 is connected in parallel to the fifth active switching component 131 and a sixth diode 134 is connected in parallel to the sixth active switching component 132. The transformer is further coupled to a fourth branch 145 comprising at least one switching unit 140. The at least one switching unit 140 comprises a seventh active switching component 141 and an eighth active switching component 142. A seventh diode 143 is connected in parallel to the seventh active switching component 141 and an eighth diode 144 is connected in parallel to the eighth active switching component 142. The voltage across the node coupling the transformer unit 150 to the third branch 135 and the node coupling the transformer unit 150 to the fourth branch 145 is referred as a secondary voltage 155.

Although the converter comprises four branches each comprising at least one switching unit, it is understood by the skilled person that the present disclosure is not limited thereto. It is further understood by the skilled person that the present disclosure is not limited to one switching unit. Furthermore, it is understood by the skilled person that the present disclosure is not limited to each switching unit comprising two active switching components. According to an embodiment, a power converter may comprises at least one inductive component and at least one branch having at least one switching unit, the at least one switching unit comprising a first active switching component and a second active switching component acting as switches and the at least one inductive component being coupled to the at least one branch.

Although omitted for visibility, it is understood by the skilled person that the first active switching component 111 is controlled by a first signal with a duty cycle $D_1$. Similarly, it is further understood by the skilled person that the second active switching component to the eighth active switching component 112~142 are controlled by the respective signal with a duty cycle Dn where n is an assigned number of an active switching component.

According to an embodiment, the power converter comprises or is at least one of an AC/AC, AC/DC, DC/DC, or DC/AC converter, in particular an active bridge converter, more particularly a dual active bridge converter.

According to an embodiment, a first active switching component and a second active switching component are at least one of an insulated-gate bipolar transistor, a metal-oxide-semiconductor field-effect transistor, a bipolar transistor or a thyristor.

According to an embodiment, electrical components are connected in parallel to the active switching components. The parallel connection comprises parallel connections with different polarity orientation such as anti-parallel connection.

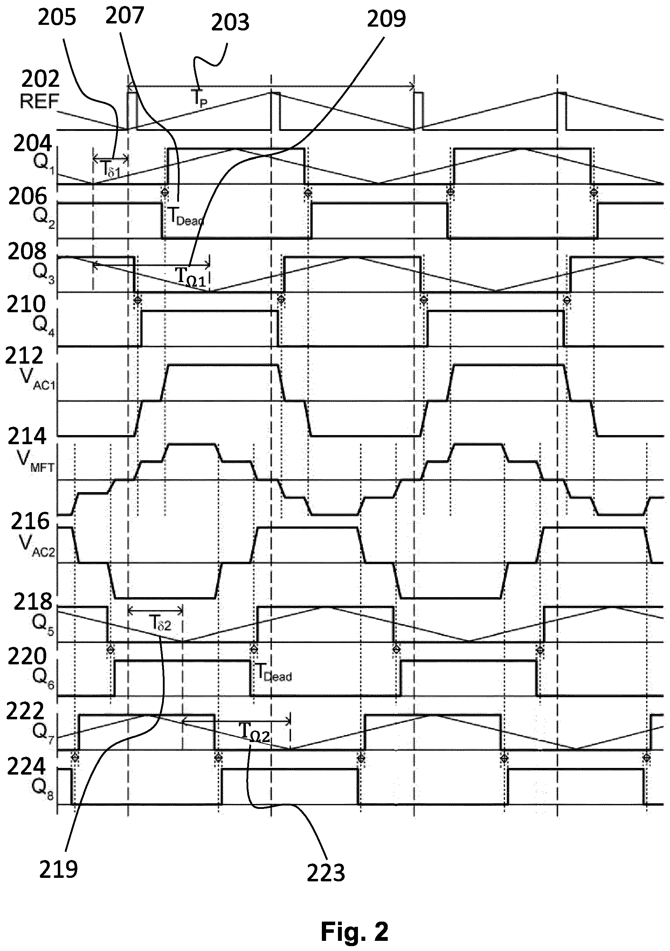

Fig. 2 shows exemplary signals of a power converter according to an embodiment of the present disclosure. In particular, the power converter is the embodiment power converter 100 shown in Fig. 1.

A reference signal 202 has a reference period $T_P$ 203. A first signal 204 controls the first active switching component 111 with a duty cycle D1. The duty cycle D1 is a ratio between an activation period of the first signal 204 and the reference period $T_P$ 203. It is understood by the skilled person that the activation period is the period during which the controlling active switching component is forced into a conducting state. A second signal 206 controls the second active switching component 112 with a duty cycle D2. The duty cycle D2 is a ratio between an activation period of the second signal 206 and the reference period $T_P$ 203. A third signal 208 controls the third active switching component 121 with a duty cycle D3. The duty cycle D3 is a ratio between an activation period of the third signal 208 and the reference period $T_P$ 203. A fourth signal 210 controls the fourth active switching component 122 with a duty cycle D4. The duty cycle D4 is a ratio between an activation period of the fourth signal 210 and the reference period $T_P$ 203. A fifth signal 218 controls the fifth active switching component 131 with a duty cycle D5. The duty cycle D5 is a ratio between an activation period of the third signal 218 and the reference period $T_P$ 203. A sixth signal 220 controls the sixth active switching component 132 with a duty cycle D6. The duty cycle D6 is a ratio between an activation period of the sixth signal 220 and the reference period $T_P$ 203. A seventh signal 222 controls the seventh active switching component 141 with a duty cycle D7. The duty cycle D7 is a ratio between an activation period of the seventh signal 222 and the reference period $T_P$ 203. An eighth signal 224 controls the eighth active switching component 142 with a duty cycle D8. The duty cycle D8 is a ratio between an activation period of the eighth signal 224 and the reference period $T_P$ 203. Furthermore, a voltage applied across the transformer unit 150 is the desired transformer voltage 214 and is a subtraction of the desired secondary voltage 216 from the desired primary voltage 212.

The activation period of the first signal 204 controlling the first component 111 and the activation period of the second signal 206 controlling the second component 112 are set such the first active switching component 111 and the second active switching component 112 are not conducting for a time range $T_{Dead}$ 207.

The activation period of the third signal 208 controlling the third component 121 and the activation period of the fourth signal 210 controlling the fourth component 122 are set such the third active switching component 121 and the fourth active switching component 122 are not conducting for a time range $T_{Dead}$ 207.

The activation period of the fifth signal 218 controlling the fifth component 131 and the activation period of the sixth signal 220 controlling the sixth component 132 are set such the fifth active switching component 131 and the sixth active switching component 132 are not conducting for a time range $T_{Dead}$ 207.

The activation period of the seventh signal 222 controlling the seventh component 141 and the activation period of the eighth signal 224 controlling the eighth component 142 are set such the seventh active switching component 141 and the eighth active switching component 142 are not conducting for a time range $T_{Dead}$ 207.

A first branch phase shift 205 sets the timing of the voltage transition of the first branch 115 and a second branch phase shift 209 sets the timing of the voltage transition of the second branch 125. The difference between the first branch phase shift 205 and the second branch phase shift 209 defines the time duration which the desired primary voltage 212 stays on each signal level.

A third branch phase shift 219 sets the timing of the voltage transition of the third branch 135 and a fourth branch phase shift 223 sets the timing of the voltage transition of the fourth branch 145. The difference between the third branch phase shift 219 and the fourth branch phase shift 223 defines the time duration which the desired secondary voltage 216 stays on each signal level.

The desired inductor voltage 214 applied on the inductive component 153 is the difference between the desired primary voltage 212 applied to the primary voltage 154 and the desired secondary voltage 216 applied to the secondary voltage 155 and is controlled by the phase shifts 205 209 219 223.

It is understood by the skilled person that the first signal 204 and the second signal 206 are phase shifted by the first branch phase shift 205 with respect to the reference signal 202. It is further understood by the skilled person that the third signal 208 and the fourth signal 210 are phase shifted by the second branch phase shift 209 with respect to the reference signal 202. Similarly, the fifth signal 218 and the sixth signal 220 are phase shifted by the third branch phase shift 219 with respect to the reference signal 202. The seventh signal 222 and the eighth signal 224 are phase shifted by the fourth branch phase shift 223 with respect to the reference signal 202.

Although constant time range $T_{Dead}$ 207 is presented, it is understood by the skilled person that the time range $T_{Dead}$ 207 formed by the first signal 204 and the second signal 206 may be different from the time range $T_{Dead}$ 207 formed by the third signal 208 and the fourth signal 210. It is further understood by the skilled person that the time range $T_{Dead}$ 207 may be dependent on the switching unit.

During time range $T_{Dead}$ 207, the monitored current 153 flows comprises the current flow through at least one of the connected in parallel diodes 113 114 123 124 133 134 143 144. The direction of the monitored current 153 flow determines the polarity of the monitored current 153. It is understood by the skilled person that one can infer the voltage at the nodes coupling the transformer unit 150 and the branches 115 125 135 145 based on the polarity of the monitored current flow 153. It is further understood by the skilled person that the inferred voltages during the time range $T_{Dead}$ 207 causes discrepancy between the primary voltage 154 and the desired primary voltage 212 and between the secondary voltage 155 and the desired secondary voltage 216. Consequently, there exists a discrepancy between the applied inductor voltage and the desired inductor voltage 214. It is understood by the skilled person such lack of control during the time range $T_{Dead}$ 207 leads to the DC component in the monitored current 153.

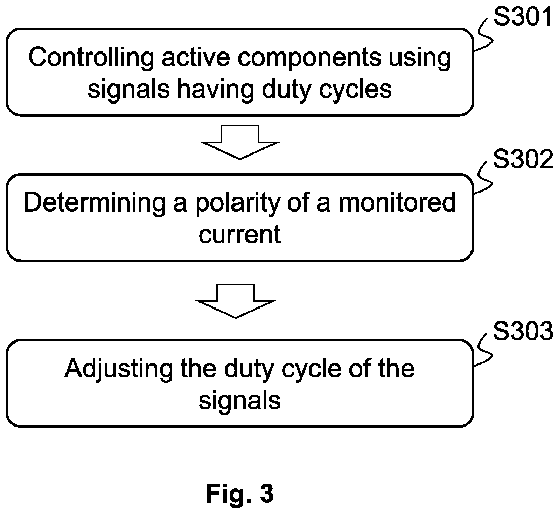

Fig. 3 shows a flowchart of a method according to an embodiment of the present disclosure.

In S301, a first active switching component is controlled with a first signal having a first duty cycle D1 and a second active switching component is controlled with a second signal having a second duty cycle D2.

In S302, a polarity of a monitored current through the at least one inductive component is determined based on the monitored current. Although the monitoring current is not part of the method shown in the embodiment in Fig.3, it is understood by the skilled person that determining the polarity requires monitoring.

In S303, the first duty cycle D1 and the second duty cycle D2 are adjusted based on the determined polarity of the monitored current.

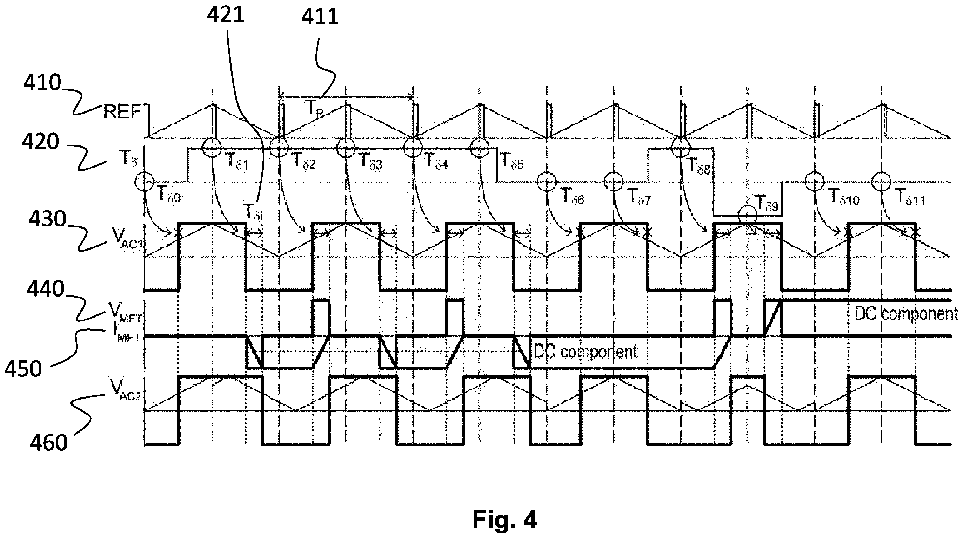

Fig. 4 shows exemplary signals and the monitoring current, in response to phase shifts, of a power converter. In particular, the power converter comprises the transformer unit 150 of the embodiment shown in Fig. 1. However, it is understood by the skilled person that the present disclosure is not limited thereto.

A reference signal 410 has a reference period 411. A target phase shift 420 is a continuous function and is indexed at every half of the reference period 411. A voltage applied across the transformer unit 150 is the transformer voltage 440 and is a subtraction of the secondary voltage 460 from the primary voltage 430.

At every half the reference period 411, the target phase shift 420 is indexed and phase-shifts the secondary voltage 460 by the indexed target phase shift 420 with respect to the primary voltage 430 at an earliest transition of the primary voltage 430. The earliest transition of the primary voltage 430 is the transition after the target-phase-indexing half period 411. It is understood by the skilled person that the transition comprises any change in the value of the considered parameter. For instance, the transition may comprises altering the polarity and/or alternating among set values. The phase-shifting the secondary voltage 460 by the indexed target phase shift 420 with respect to the primary voltage 430 causes the transformer voltage 440 to induce DC component in the monitored current 450.

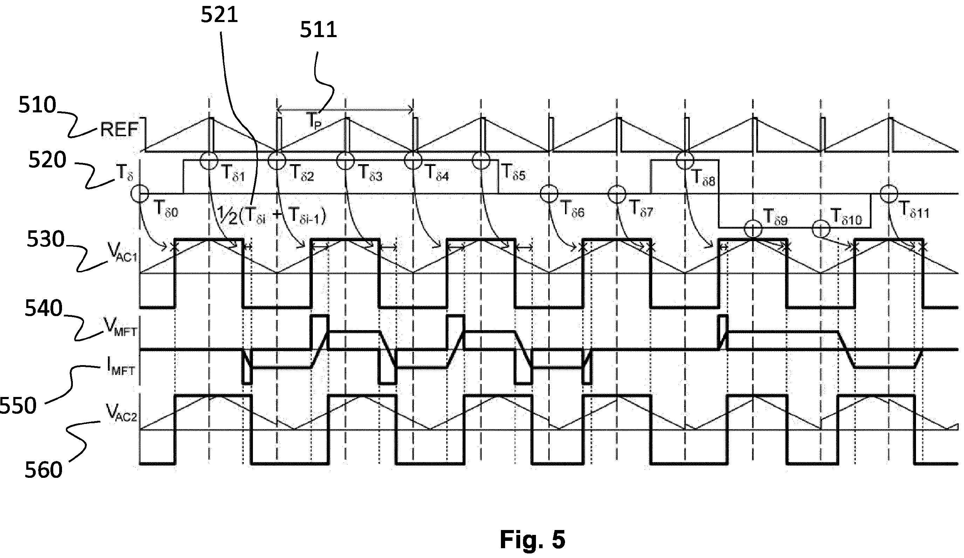

Fig. 5 shows exemplary signals and the monitoring current, in response to phase shifts, of a power converter according to an embodiment of the present disclosure. In particular, the power converter comprises the transformer unit 150 of the embodiment shown in Fig. 1. However, it is understood by the skilled person that the present disclosure is not limited thereto.

A reference signal 510 has a reference period 511. A target phase shift 520 is a continuous function and is indexed at every half of the reference period 511. A voltage applied across the transformer unit 150 is the transformer voltage 540 and is a subtraction of the secondary voltage 560 from the primary voltage 530.

At every half the reference period 511, the target phase shift 520 are indexed and phase-shifts the secondary voltage 560 by a mean value of two consecutive indexed target phase shift 520 with respect to the primary voltage 530 at an earliest transition of the primary voltage 530. In the embodiment shown in Fig.5, an altered phase shift at the $i^{th}$ half reference period is calculated by averaging the two consecutive target phase shifts at the $i^{th}$ and $(i-1)^{th}$ half reference periods as

$$T_{\delta i,altered} = \frac{1}{2}(T_{\delta i} - T_{\delta i-1})$$

where $T_{\delta n}$ denotes the phase shifts at the $n^{th}$ half reference period. When step changes are applied to the target phase shifts, the altered phase shift reduces the phase shift of the secondary voltage 560 with respect to the primary voltage 530 which is reflected on the transformer voltage 540 as a shorter period thereof with non-zero amplitude. As a result, the increase in the monitored current 550, or decrease in the monitored current 550 depending on the polarity, is reduced with respect to the monitored current 450 of the embodiment shown in Fig.4. Consequently, the DC component of the monitored current 550 is not induced.

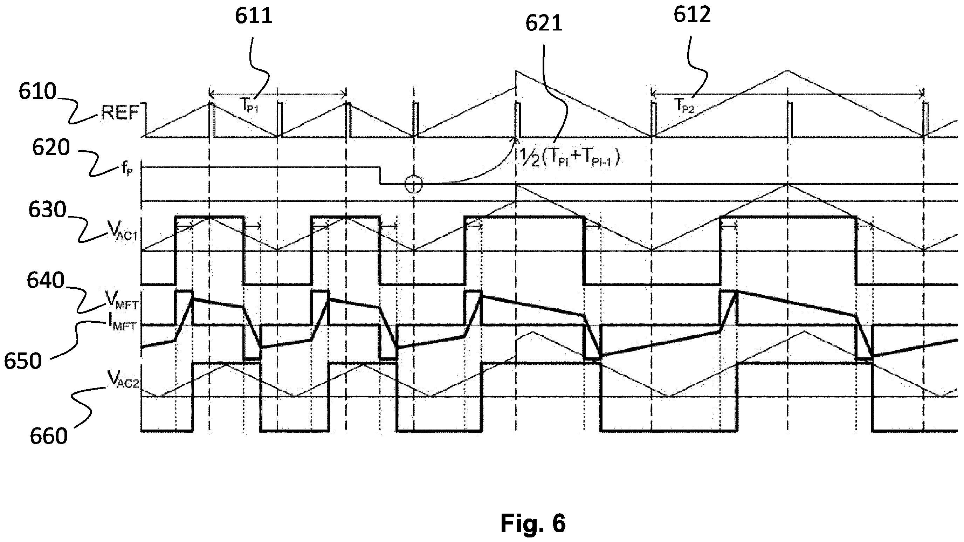

Fig. 6 shows exemplary signals and the monitoring current, in response to frequency shifts, of a power converter according to an embodiment of the present.

A reference period 610 has a first reference period 611 based on the target frequency 620 and a second reference period 621 based on the target frequency 620. The target frequency 620 is a continuous function and is indexed for every frequency value.

In the embodiment shown in Fig.6, the altered reference period is calculated by averaging the two consecutive target reference periods, in response to a step change in the target frequency 620, as

$$T_{Pi,altered} = \frac{1}{2}(T_{pi} - T_{pi-1})$$

where $T_{pn}$ denotes the reference period of the $n^{th}$ indexed frequency value. Although the conversion is omitted, it is understood by the skilled person that the target frequency 620 can be easily converted into the target reference period. As the result, the altered reference period changes the period in two steps, thereby maintaining the constant periods with non-zero-amplitudes of transformer voltage 640. Consequently, the DC component of the monitored current 650 is not induced.

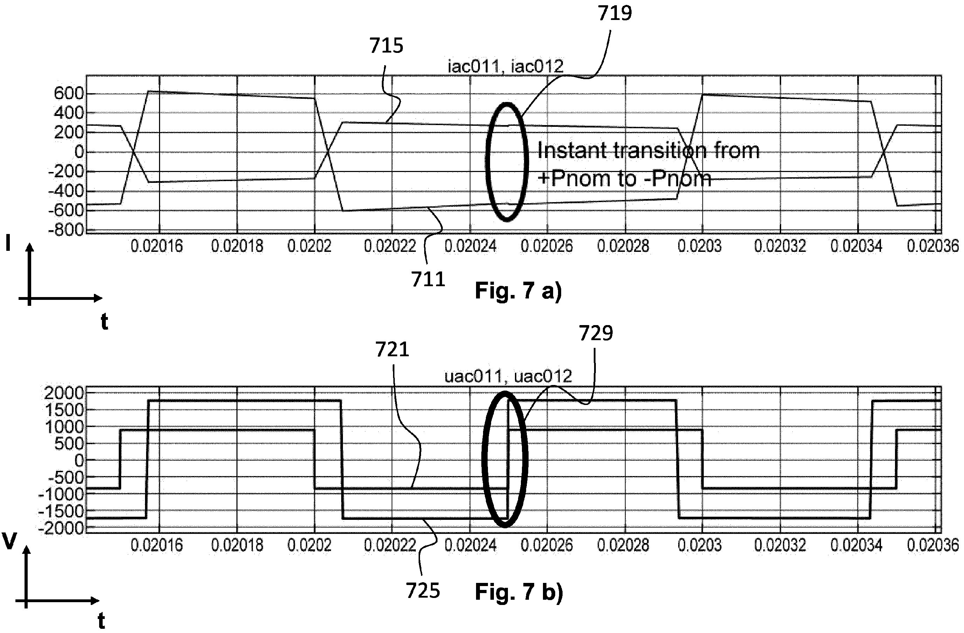

Fig. 7a and 7b show simulated current and voltage responses to a step phase shift applied to a power converter according to an embodiment of the present disclosure. In particular, the power converter comprises the transformer unit 150 of the embodiment shown in Fig. 1. However, it is understood by the skilled person that the present disclosure is not limited thereto.

A primary side current 711 of the transformer unit 150 and a secondary side current 715 of the transformer unit 150 exhibits a smooth transition when a phase shift step change is applied, as evident by the signals within the encircled region 719. Furthermore, a primary voltage 721 of the transformer unit 150 and a secondary voltage of the transformer 725 are in phase when a phase shift step change is applied, as evident by the signals within the encircled region 729. Therefore, the deadtime mitigation method of the present disclosure removes DC component in a current, thereby improving the recovery time to achieve an instant power transition.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A method for power control of a power converter comprising:

   controlling, with a first signal having a first duty cycle $D_1$, a first active switching component in a switching unit of at least one branch;
   controlling, with a second signal having a second duty cycle $D_2$, a second active switching component of the switching unit;
   determining a polarity of a monitored current through at least one inductive component coupled to the at least one branch; and

   adjusting the first duty cycle $D_1$ and the second duty cycle $D_2$ based on the determined polarity.

2. The method according to claim 1, wherein an activation period of the first signal and an activation period of the second signal are compared to a reference period $T_{ref}$ to calculate the first duty cycle D1 and the second duty cycle D2.

3. The method according to claim 1 or 2, wherein the activation period of the first signal and the activation period of the second signal are set such that the first active switching component and the second active switching component are not conducting for a time range $T_{dead}$.

4. The method according to claim 3, wherein a first electrical component is arranged in parallel to the first active switching component and a second electrical component is arranged in parallel to the second active switching component, wherein during the time range $T_{dead}$ the first electrical component and the second electrical component are configured to act as a current source or sink.

5. The method according to claim 3 or 4, wherein during the adjusting the first duty cycle $D_1$ and the second duty cycle $D_2$ a ratio between the time range $T_{dead}$ and a reference period $T_{ref}$ is kept constant.

6. The method according to claim 3 or 4, wherein during the adjusting the first duty cycle D1 and the second duty cycle D2 the time range $T_{dead}$ is kept constant.

7. The method according to any one of claims 1 to 6, comprising iterating the determining a polarity of the monitored current and the adjusting the first duty cycle $D_1$ and the second duty cycle $D_2$.

8. The method according to any one of claims 1 to 7, wherein by adjusting the first duty cycle $D_1$ and the second duty cycle $D_2$, the first duty cycle $D_1$ is increased by the same amount as the second duty cycle $D_2$ is decreased or the first duty cycle $D_1$ is decreased by the same amount as the second duty cycle $D_2$ is increased.

9. The method according to any one of claims 1 to 8, wherein the periods of the first signal and the second signal are between 1kHz and 25kHz.

10. The method according to any one of claims 1 to 9, wherein the first active switching component and a second active switching component are at least one of an insulated-gate bipolar transistor, a metal-oxide-semiconductor field-effect transistor, a bipolar transistor or a thyristor.

11. The method according to any one of claims 1 to 10, wherein the power converter comprises or is at least one of an AC/AC, AC/DC, DC/DC, or DC/AC converter, in particular an active bridge converter, more particularly a dual active bridge converter.

12. The method according to any one of claims 1 to 11, comprising altering a phase shift based on at least two target phase shifts and adjusting the first duty cycle $D_1$ and the second duty cycle $D_2$ based on the altered phase shift.

13. The method according to any one of claims 1 to 12, comprising altering a period based on at least two target periods and adjusting the first duty cycle $D_1$ and the second duty cycle $D_2$ based on the altered period.

14. A controller for power control of a power converter, comprising:
a processor configured to:

> control, with a first signal having a first duty cycle Di, a first active switching component in a switching unit of at least one branch;
> control, with a second signal having a second duty cycle $D_2$, a second active switching component of the switching unit;
> determine a polarity of a monitored current through at least one inductive component coupled to the at least one branch; and

adjust the first duty cycle $D_1$ and the second duty cycle $D_2$ based on the determined polarity.

15. The controller according to claim 14, wherein the processor is configured to iterate the monitoring a current, the determining a polarity of the current and the adjusting the first duty cycle $D_1$ and the second duty cycle $D_2$.

16. A system comprising a controller according to claim 14 or 15 and a power converter comprising a first active switching component and a second active switching component in a switching unit of at least one branch and at least one inductive component coupled to the at least one branch.

Fig. 1

Fig. 2

Controlling active components using
signals having duty cycles ⌇ S301

⬇

Determining a polarity of a monitored
current ⌇ S302

⬇

Adjusting the duty cycle of the
signals ⌇ S303

**Fig. 3**

**Fig. 4**

**Fig. 5**

**Fig. 6**

EP 4 087 106 A1

Fig. 7 a)

Fig. 7 b)

EP 4 087 106 A1

Europäisches
Patentamt

European
Patent Office

Office européen
des brevets

# EUROPEAN SEARCH REPORT

**Application Number**

EP 21 17 2865

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/076713 A1 (KOKUSHO YUICHI [JP] ET AL) 15 March 2018 (2018-03-15)<br>* abstract *<br>* paragraphs [0041], [0043] - [0046], [0048] - [0053]; figures 1, 3-6 *<br>----- | 1-16 | INV.<br>H02M1/38<br>H02M3/335<br>H02M1/40<br>H02M7/48 |
| | | | TECHNICAL FIELDS SEARCHED (IPC)<br><br>H02M |

The present search report has been drawn up for all claims

| Place of search | Date of completion of the search | Examiner |
|---|---|---|
| The Hague | 1 October 2021 | Van der Meer, Paul |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 17 2865

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2021

| Patent document cited in search report | Publication date | Patent family member(s) | Publication date |
|---|---|---|---|
| US 2018076713 A1 | 15-03-2018 | CN 107819402 A<br>DE 102017216344 A1<br>JP 6707003 B2<br>JP 2018046643 A<br>US 2018076713 A1 | 20-03-2018<br>15-03-2018<br>10-06-2020<br>22-03-2018<br>15-03-2018 |

EPO FORM P0459

For more details about this annex : see Official Journal of the European Patent Office, No. 12/82